# EUROPEAN PATENT SPECIFICATION

(11) **EP 1 854 850 B1**
(45) Date of publication and mention of the grant of the patent: **12.08.2009**
(21) Application number: 06009484.4
(22) Date of filing: 09.05.2006
(51) Int. Cl.: C09D 7/12, C09D 5/14

(54) **Use of microcapsules for making paints and lacquers**
Verwendung von Mikrokapseln zur Herstellung von Farben und Lacken
Utilisation de microcapsules dans la fabrication de peintures et laques

(43) Date of publication of application: 14.11.2007
(73) Proprietor: Cognis IP Management GmbH, 40589 Düsseldorf (DE)
(72) Inventor: Bigorra Llosas, Joaquin, Dr., 08201, Sabadell (ES); Graupera, Elisabet, 08203, Sabadell (Barcelona) (ES); Fabry, Bernd, Dr., 41352, Korschenbroich (DE); Mathis, Raymond, Dr., 40627, Düsseldorf (DE); Birnbrich, Paul, Dr., 42719, Solingen (DE)
(74) Representative: Fabry, Bernd

(56) References cited:
- DE-A1- 3 512 565
- DATABASE WPI Week 199103 Derwent Publications Ltd., London, GB; AN 1991-019501 XP002388671 & JP 02 293041 A (MATSUMOTO YUSHI SEIYAKU KK) 4 December 1990 (1990-12-04)

## Description

### Object of the invention

The present invention belongs to the field of paints and lacquers and relates to the use of defined types of encapsulated actives for making paints and lacquers and paints and lacquers comprising said encapsulated actives.

### State of the art

Paint and lacquer compositions typically include colorant particles dispersed in a resinous binder. In addition, those products may comprise further auxiliaries, more particularly active ingredients providing for example a fresh smell or protecting the objects, which have been treated with the paints or lacquers, against insects, corrosion and the like. Unfortunately, very often those actives do not show a sufficient stability in the final composition, either since they interfere with other ingredients or they are simply disintegrated by light or water. A simple solution to this problem could be to encapsulate such actives in order to achieve both, a protection of the compounds and their controlled release over a longer period of time. Nevertheless, what one can observe is that well known microcapsules, for example based on gelatine as a matrix, show a strong tendency to increase the viscosity of the paints and lacquers, especially when storage takes place at elevated temperatures, which is definitely unwanted by the customer. Another serious disadvantage is that paints comprising common microcapsules when applied on surface provide films of poor quality, since they show lots of visual defects, like spots and craters, since e.g. the size distribution is not narrow enough and comprise too many individuals with high diameters.

The object of the present invention has therefore been to provide a solution to said complex problem and to develop paints and lacquers comprising encapsulated actives which show an improved storage stability and exhibit a superior film quality.

### Description of the invention

The present invention claims the use of microcapsules having an average diameter of 0.1 to 25 µm, obtainable in that a mixture of actives and polyvinylethers (PVE) is polymerised with maleic anhydride (MA), followed by a cross-linking reaction with metamin-formaldehyde resins, for making paints and lacquers.

Surprisingly, it has been found that the cited microcapsules obtained from the polymerisation of polyvinylethers in general and particularly polyvinylmethyl ether (PVME), and MA solve the complex problem, since they do not raise the viscosity when introduced into the final formulation, even when stored at elevated temperatures over a period of two months. Moreover, the paint films do not exhibit visual defects, spots or craters due to the fact that the specific microcapsules show a regular form with a soft, flexible shell and exhibit a small and narrow size distribution.

Therefore, microcapsules which were found particular useful for the claimed application, show a size distribution where at least 50 % b.w. of said capsules have a diameter between 0.5 and 5 and more particularly between 1 and 4 µm.

### Actives

Although the nature of the active is not critical for the present invention, preferred examples are perfumes, fragrances, aromas, insecticides and biocides.
- Perfumes, fragrances and aromas
   Suitable perfume oils are mixtures of natural and synthetic perfumes. Natural perfumes include the extracts of blossoms (lily, lavender, rose, jasmine, neroli, ylang-ylang), stems and leaves (geranium, patchouli, petitgrain), fruits (anise, coriander, caraway, juniper), fruit peel (bergamot, lemon, orange), roots (nutmeg, angelica, celery, cardamom, costus, iris, calmus), woods (pinewood, sandalwood, guaiac wood, cedarwood, rosewood), herbs and grasses (tarragon, lemon grass, sage, thyme), needles and branches (spruce, fir, pine, dwarf pine), resins and balsams (galbanum, elemi, benzoin, myrrh, olibanum, opoponax). Animal raw materials, for example civet and beaver, may also be used. Typical synthetic perfume compounds are products of the ester, ether, aldehyde, ketone, alcohol and hydrocarbon type. Examples of perfume compounds of the ester type are benzyl acetate, phenoxyethyl isobutyrate, p-tert.butyl cyclohexylacetate, linalyl acetate, dimethyl benzyl carbinyl acetate, phenyl ethyl acetate, linalyl benzoate, benzyl formate, ethylmethyl phenyl glycinate, allyl cyclohexyl propionate, styrallyl propionate and benzyl salicylate. Ethers include, for example, benzyl ethyl ether while aldehydes include, for example, the linear alkanals containing 8 to 18 carbon atoms, citral, citronellal, citronellyloxyacetaldehyde, cyclamen aldehyde, hydroxycitronellal, lilial and bourgeonal. Examples of suitable ketones are the ionones, isomethylionone and methyl cedryl ketone. Suitable alcohols are anethol, citronellol, eugenol, isoeugenol, geraniol, linalool, phenylethyl alcohol and terpineol. The hydrocarbons mainly include the terpenes and balsams. However, it is preferred to use mixtures of different perfume compounds which, together, produce an agreeable perfume. Other suitable perfume oils are essential oils of relatively low volatility which are mostly used as aroma components. Examples are sage oil, camomile oil, clove oil, melissa oil, mint oil, cinnamon leaf oil, lime-blossom oil, juniper berry oil, vetiver oil, olibanum oil, galbanum oil, ladanum oil and lavendin oil. The following are preferably used either individually or in the form of mixtures: bergamot oil, dihydromyrcenol, lilial, lyral, citronellol, phenylethyl alcohol, hexylcinnamaldehyde, geraniol, benzyl acetone, cyclamen aldehyde, linalool, Boisambrene Forte, Ambroxan, indole, hedione, sandelice, citrus oil, mandarin oil, orange oil, allylamyl glycolate, cyclovertal, lavendin oil, clary oil, damascone, geranium oil bourbon, cyclohexyl salicylate, Vertofix Coeur, Iso-E-Super, Fixolide NP, evernyl, iraldein gamma, phenylacetic acid, geranyl acetate, benzyl acetate, rose oxide, romillat, irotyl and floramat.
- Insecticides and biocides
   Examples for suitable insecticides and biocides are sesquiterpenes, Diethyltoluamid (DEET), Ethyl Butylacetylaminopropionat (IR3535), Hydroxyethyl Isobutyl Piperidine Carboxylate and preferably pyrethroides and their mixtures. Typical representatives for pyrethroides are 5-Benzyl-3-furylmethyl (+)-cis-(1R,3S,E) 2,2-dimethyl-3-(2-oxo-2,3,4,5-tetrahyfrothiophenylidenmethyl)cyclopropancarboxylate, 6-Chloropiperonyl 2,2-dimethyl-3-(2-methylpropenyl)cyclopropancarboxylate, Acrinathrin, Allethrin, Bifentrin, Bioresmethrin, Cismethrin, Cyclethrin, Cycloprothrin, Cyfluthrin, Cyhalothrin, Cypermethrin, Cyphenotrin, Deltamethrin, Dimethrin, Empenthrin, Esfenvalerat, Fenfluthrin, Fenpropathrin, Fenvalerat, Flucythrinat, Flumethrin, Fluvalinat, Furethrin, Halfenprox, Imiprothrin, Methyl cis/trans-3-(2,2-dichlorovinyl)-2,2-dimethylcyclopropan-1-carboxylat, and particularly Permethrin and their mixtures. Also useful as biocides are certain pigments like the oxides of copper.

### Preparation of the micro-capsules

Capsules obtainable by polymerisation of vinyl ethers and maleic anhydride followed by cross-linking with a melamin-formaldehyde resin are known from the prior art. For example German patent application DE 3512565 A1 (BASF) discloses such capsules comprising paraffins as actives for the surface treatment of copy papers. Another process is disclosed in US 4,089,802 (NRC Corp.). The teaching of these documents as far as the preparation of the capsules to be used according to the present invention is therefore fully incorporated by reference.

### Industrial application

As outlined above, the microcapsules used according to the present invention exhibit superior properties to paints and lacquers than other capsules found in the market. Therefore, another object of the present invention is directed to paints and lacquers comprising microcapsules having an average diameter of 0.1 to 25 µm, and obtainable in that a mixture of actives and polyvinylethers, more particularly polyvinylmethylether is polymerised with maleic anhydride (MA) and subsequently cross-linked with a melamin-formaldehyde resin.

In particular, those paints and lacquers comprising microcapsules are preferred where least 50 % b.w. of said capsules show a diameter of 0.1 to 5 µm. Typically, the content of said micro-capsules in said paints and lacquers lies between 0.01 and 15, preferably 0.1 to 10 and more preferably 1 to 5 % b.w.

### Examples

All applications tests were performed by adding 0.5 % b.w. of an encapsulated active (permethrin, 0.5 % b.w.) in a polyvinylmethylether/maleic anhydride copolymer matrix, cross-linked with a melamin-formaldehyde resin according to DE 3512565 A1 - calculated as active matter - either to a semi-gloss paint (*Pintura Satinada Ciclón,* Bruguer) or a flat paint (*Pintura Mate Ciclón,* Bruguer) under vigorous stirring (2,000 rpm, 10 min). Once the products were homogenised the following parameters were determined:
- Paint viscosity (according to Brookfield) after the addition of the capsules and paint stability after storage at 45 °C;
- Preparation of films (20 g of paint) by means of a brush (visual defects);
- Paint draw down at 100 µm (visual defects).

The tests according to the present invention were conducted with microcapsules obtained according to working example 1. The results are shown in Table 1

**Table 1**

| **Application tests** | | | | |
|---|---|---|---|---|
| **Examples** | **C1** | **1** | **2** | **3** |
| Degree of encapsulation [%] | 0 | 15 | 27 | 27 |
| Quantity added (= 0.5 % b.w. active) | - | 3.33 | 1.85 | 1.85 |

| ***Flat paint*** | | | | |
|---|---|---|---|---|
| Viscosity, 25 °C [mPas] | 7,800 | 8,100 | 9,600 | 10,700 |
| Viscosity, 6 d, 45 °C [mPas] | 10,650 | 11,100 | 14,300 | 13,000 |
| Brush test | ok | ok | ok | ok |
| Dray down test | no defects | no defects | no defects | no defects |

| ***Satin paint*** | | | | |
|---|---|---|---|---|
| Viscosity, 25 °C [mPas] | 7,000 | 6,300 | 7,000 | 7,100 |
| Viscosity, 6 d, 45 °C [mPas] | 7,100 | 6,300 | 7,600 | 7,500 |
| Brush test | ok | ok | ok | ok |
| Dray down test | no defects | no defects | no defects | no defects |

As one can see, the microcapsules according to the present invention allow the manufacture of flat and semi-gloss paints with stable viscosity. In the application said paints exhibit an excellent performance, the obtained films do not show any defects or spots or craters.

## Claims

1. Use of microcapsules having an average diameter of 0.1 to 25 µm, obtainable in that a mixture of actives and polyvinylethers is polymerised with maleic anhydride (MA), followed by a cross-linking reaction with melamin-formaldehyde resins, for making paints and lacquers.

2. Use according to claim 1, **characterised in that** at least 50 % b.w. of said microcapsules show a diameter of 0.5 to 5 µm.

3. Use according to claims 1 and/or 2, **characterised in that** the actives are selected from the group consisting of perfumes, fragrances, aromas, insecticides and biocides.

4. Use according to any of the claims 1 to 3, **characterised in that** said microcapsules are added to said paints and lacquers in amounts of from 0.001 to 25 % b.w.

5. Paints and lacquers, comprising microcapsules according to claim 1.

## Patentansprüche

1. Verwendung von Mikrokapseln mit einem mittleren Durchmesser von 0,1 bis 25 µm, **dadurch** erhältlich, dass man zunächst eine Mischung aus aktiven Wirkstoffen und Polyvinylethern mit Maleinsäureanhydrid (MA) polymerisiert und dann einer Vernetzung mit Melamin-Formaldehyd-Harzen unterwirft, für die Herstellung von Farben und Lacken.

2. Verwendung nach Anspruch 1, **dadurch gekennzeichnet, dass** wenigstens 50 Gew.-% der besagten Mikrokapseln einen Durchmesser von 0,5 bis 5 µm aufweisen.

3. Verwendung nach den Ansprüchen 1 und/oder 2, **dadurch gekennzeichnet, dass** die aktiven Wirkstoffe ausgewählt sind aus der Gruppe, die gebildet wird von Parfümölen, Riechstoffen, Aromen, Insektiziden und Bioziden.

4. Verwendung nach einem der Ansprüche 1 bis 3, **dadurch gekennzeichnet, dass** besagte Mikrokapseln den Farben und Lacken in Mengen von 0,001 bis 25 Gew.-% zugesetzt werden.

5. Farben und Lacke, enthaltend Mikrokapseln nach Anspruch 1.

## Revendications

1. Utilisation de microcapsules ayant un diamètre moyen de 0,1 à 25 µm, susceptibles d'être obtenues par le fait qu'un mélange d'agents actifs et de polyvinyléthers est polymérisé avec de l'anhydride maléique (MA), suivi d'une réaction de réticulation avec des résines mélamine-formaldéhyde, pour fabriquer des peintures et des laques.

2. Utilisation selon la revendication 1, **caractérisée en ce qu'**au moins 50 % en poids desdites microcapsules présentent un diamètre de 0,5 à 5 µm.

3. Utilisation selon les revendications 1 et/ou 2, **caractérisée en ce que** les agents actifs sont choisis dans le groupe constitué de parfums, de fragrances, d'arômes, d'insecticides et de biocides.

4. Utilisation selon l'une quelconque des revendications 1 à 3, **caractérisée en ce que** lesdites microcapsules sont ajoutées auxdites peintures et laques dans des quantités de 0,001 à 25 % en poids.

5. Peintures et laques, comprenant des microcapsules selon la revendication 1.
